# FASCICULE DE BREVET EUROPEEN

(11) **EP 1 904 411 B1**
(45) Date de publication et mention de la délivrance du brevet: **13.04.2011**
(21) Numéro de dépôt: 06777701.1
(22) Date de dépôt: 11.07.2006
(51) Int. Cl.: C03C 1/00, G21F 9/30, C03C 3/093, B09B 3/00

(54) **PROCEDE DE CONFINEMENT D'UNE MATIERE PAR VITRIFICATION**
VERFAHREN ZUM EINSCHLUSS EINER SUBSTANZ DURCH VERGLASUNG
METHOD FOR CONFINING A SUBSTANCE BY VITRIFICATION

(30) Priorité: 15.07.2005 FR 0552218
(43) Date de publication de la demande: 02.04.2008
(73) Titulaire: Commissariat à l'Énergie Atomique et aux Énergies Alternatives, 75015 Paris (FR)
(72) Inventeur: PINET, Olivier, F-30320 Poulx (FR); BLISSON, Thierry, F-30130 Pont Saint-Esprit (FR); GRANDJEAN, Agnès, F-30330 Saint-Marcel-De-Careiret (FR); SCHULLER, Sophie, F-30200 Chusclan (FR)
(74) Mandataire: Poulin, Gérard
(86) Numéro de dépôt international: PCT/EP2006/064101
(87) Numéro de publication internationale: WO 2007/009914

(56) Documents cités:
- DE-A1- 19 612 700
- US-A- 5 662 579
- US-A- 5 947 887
- US-A1- 2004 024 277
- H.D. SCHREIBER AND A.L. HOCKMAN: "Redox chemistry in candidate glasses for nuclear waste immobilization" J. AMER. CERAM. SOC., vol. 70, 1987, pages 591-594, XP002376769
- J.D GARAB, HONG LI, J.D. VIENNA: "X-ray absorption spectroscopic investigation of the environment of cerium in glasses based on complex cerium alkali borosilicate compositions" JOURNAL OF NON-CRYSTALLINE SOLIDS, vol. 226, 1998, pages 162-174, XP002376770
- C. LOPEZ: "Solubilité des actinides et de leurs simulants dans les verres nucléaires limites d'incorporation et compréhension des mécanismes" 2003, RAPPORT CEA-R-6019 , XP002376790 cité dans la demande résumé, pages 120-140, particulièrement page 121, dernier paragraphe

## Description

### Domaine technique

La présente invention se rapporte à un procédé de confinement d'une matière par vitrification.

Les matières visées sont principalement les déchets minéraux ou en solution. La présente invention permet par exemple de confiner des déchets nucléaires dans une matrice de verre.

Elle permet également de confiner tout déchet industriel qui comprend des espèces minérales, en particulier des métaux polluants et/ou ions métalliques polluants. On peut citer par exemple des déchets nucléaires, des résidus solides provenant de l'incinération d'ordures ménagères, en particulier des résidus constitués par des cendres sous chaudières, des cendres dites "volantes", et des gâteaux de filtration provenant de la neutralisation et du traitement des fumées d'incinération.

La présente invention apporte une amélioration aux procédés de l'art antérieur de confinement des déchets par vitrification.

### Etat de la technique antérieure

Dans l'exemple délicat du confinement par vitrification de déchets nucléaires ou de résidus d'incinération de déchets ménagers, les verres actuellement élaborés industriellement sont le résultat d'études de formulation qui optimisent leur composition voire leur température d'élaboration dans la mesure où cette dernière n'est pas déjà fixée par des contraintes liées au procédé ou à la composition des verres.

Ces optimisations de composition et de température visent à obtenir une formulation de verre qui permette à la fois:
- de diminuer le volume des déchets une fois confinés,
- d'être compatible avec une élaboration dans des procédés industriels, notamment ceux disponibles actuellement,
- d'améliorer les qualités de confinement de la matrice de verre finale (durabilité chimique, tenue à l'irradiation, résistance à la lixiviation, etc.) en vue de son entreposage.

Dans les procédés de vitrification actuels, le rôle de la fritte de verre est uniquement d'apporter les adjuvants de vitrification qui permettent d'aboutir après mélange avec les déchets à leur confinement.

Aucune des frittes de verre décrites dans l'art antérieur n'a d'action sur l'équilibre redox du verre final car, soit elle ne contient pas d'espèces multivalentes, c'est-à-dire d'espèces pouvant exister sous divers degrés d'oxydation dans le verre, soit l'état d'oxydation dans lequel elles sont incorporées dans la fritte ne fait l'objet d'aucune optimisation. En outre, les équilibres redox des différentes espèces multivalentes pouvant être présentes dans la fritte de verre n'ont jamais fait l'objet d'une attention quelconque.

L'article de Schreiber et al., 1987 (J. Amer. Ceram. Soc., vol. 70, pages 591-594) décrit un procédé de fabrication d'un verre à partir d'une fritte de verre à laquelle un couple rédox a été ajouté sous forme de poudre d'oxyde dans le seul but d'étudier l'équilibre rédox dudit couple rédox et non pour maintenir l'espèce chimique à confiner dans un équilibre redox déterminé. Par ailleurs, la fritte de verre utilisée et dont la composition est présentée dans l'article (Table 1) ne contient aucune espèce multivalente susceptible de réagir avec l'oxyde en poudre ajouté par la suite.

Les procédés actuels de vitrification de déchets nucléaires comprennent généralement deux

étapes : une évaporation-calcination des solutions de produits de fission pour obtenir un calcinat, suivie de la vitrification du calcinat formé. L'étape d'évaporation-calcination peut-être réalisée par exemple dans un tube tournant chauffé par un four à résistances. Ce procédé est connu de l'homme du métier.

Un verre formateur ou fritte de verre est ensuite ajouté au calcinat pour élaborer le verre de confinement. Par exemple à l'usine de La Hague, ce dernier est un verre borosilicaté, principalement constitué, à environ 80 %, de SiO₂ (silice), B₂O₃ (anhydride borique), Al₂O₃ (alumine) et Na₂O (oxyde de sodium).

Les verriers classiques (fabrication de vaisselle) optimisent l'état redox de leur verre, pour optimiser la couleur, pour éviter les inclusions gazeuses et pour optimiser les propriétés thermiques de leurs bains de verre. Cependant, dans les verres de verriers classiques, les concentrations des espèces multivalentes sont très faibles par rapport à celles de verres de confinement de déchets nucléaires selon la présente invention et les méthodes mises au point pour régler le redox de leur verre sont basées sur des ajouts de réducteurs tels que cokes, sulfures, etc. ou d'oxydants tels que sulfates, nitrates, etc. dans leurs mélanges vitrifiables.

Pour les présents inventeurs, de nombreux inconvénients devraient être surmontés par rapport aux techniques de confinement de l'art antérieur :
- un flux de matière supplémentaire à gérer en entrée du procédé,
- des flux gazeux supplémentaires à gérer alors que le système de traitement des gaz est sophistiqué du fait du milieu radioactif,
- le fait d'ajouter dans le procédé un flux de matière, en plus de ceux du déchet et de la fritte, oblige l'industriel à garantir des paramètres supplémentaires pour aboutir au verre qualifié : pour aboutir à l'état redox voulu, le flux de déchet et le flux de réducteur ou d'oxydants sont à corréler étroitement, et cette corrélation est difficile et nécessite par exemple de prendre en compte les variations possibles du niveau redox du flux de déchet,
- les réducteurs et les oxydants à mettre en jeu avec ce procédé sont nécessairement puissants car, outre les espèces multivalentes qu'il faut oxyder ou réduire en fonction de l'état d'oxydation dans lequel on souhaite les confiner, cette réaction est perturbée par les oxydants ou réducteurs du milieu environnant, par exemple gaz de bullage, nitrates, matière carbonée, etc. avec lesquels ils vont réagir en premier, ce qui n'est pas favorable a priori à un contrôle précis de l'état redox du verre,
- de la mise en contact de matière puissamment oxydante et/ou puissamment réductrice peut résulter des réactions exothermiques que l'on souhaite limiter dans le cadre de procédé de vitrification de déchets pour garantir un niveau de sûreté maximum et éviter des interventions de maintenance sur le procédé.

Généralement, le taux d'incorporation d'oxydes de produits de fission (calcinats) ou déchets à vitrifier varie de 12 à 18 % massique sur de tels verres. Pour l'ensemble des verres nucléaires connus, il évolue généralement, suivant la composition du déchet et le type de verre, entre 6 et 20 % massique. Pour un métal tel que le cérium oxydé dans l'état +IV, il est de 2% massique maximum. Ce taux d'incorporation est donc limité.

Il est donc nécessaire d'améliorer encore le confinement par vitrification des déchets toxiques tels que ceux précités, en particulier des déchets nucléaires, et de mettre au point des procédé de confinement de ces déchets qui soient de mise en oeuvre plus aisée au niveau industriel, plus économiques et moins dangereux, tout en utilisant des installations disponibles actuellement ou simplifiées.

Les verres de confinement doivent être toujours plus solides, plus denses, plus stables dans le temps, résistants d'avantage à la lixiviation et à l'irradiation, et permettre de stocker plus de déchets tout en réduisant encore plus le volume de stockage.

### Exposé de l'invention

La présente invention permet d'atteindre les objectifs précités en réglant de façon simple et robuste l'état redox d'un bain de verre à un niveau souhaité, grâce au remplacement des frittes de verre classiques par une fritte de verre à « pouvoir redox » sans ajouter de contrainte supplémentaires dans le mode de pilotage industriel utilisé pour le confinement d'une matière par vitrification, et sans générer de flux de matières entrant et sortant supplémentaires par rapport aux procédés de vitrification de l'art antérieur.

Pour cela, la présente invention se rapporte à un procédé de fabrication d'une fritte de verre redox destinée au confinement par vitrification d'une matière comprenant au moins une espèce chimique oxydable ou réductible, ledit procédé comprenant les étapes consistant à:
(a¹) choisir au moins un couple redox permettant de maintenir ladite, au moins une, espèce chimique dans un équilibre redox déterminé,
(a²) déterminer la quantité de ladite espèce chimique présente pour une quantité donnée de ladite matière,
(a³) déterminer par stoechiométrie, pour ladite quantité donnée de ladite matière, la quantité minimale dudit, au moins un, couple redox nécessaire pour maintenir ladite, au moins une, espèce chimique audit équilibre redox déterminé,
(a⁴) éventuellement ajuster ladite quantité minimale dudit, au moins un, couple redox de manière à tenir compte d'autres éléments oxydants ou réducteurs de la matière et/ou de la fritte de verre brute et/ou de l'environnement dans lequel le confinement par vitrification de la matière sera réalisé,
(a⁵) incorporer par mélange dans une quantité de fritte de verre brute, ou de ses précurseurs, appropriée pour le confinement de ladite quantité donnée de matière, au moins ladite quantité minimale, éventuellement ajustée, dudit, au moins un, couple redox et porter le mélange à une température suffisante pour obtenir une fonte verrière, et
(a⁶) refroidir la fonte verrière obtenue et la travailler de façon à obtenir une fritte de verre redox destinée au confinement par vitrification de ladite matière.

La présente invention décrit également une fritte de verre redox susceptible d'être obtenue par ce procédé. Les détails concernant cette fritte sont donnés ci-après, au travers de l'explication de la présente invention.

La présente invention se rapporte également à un procédé de confinement par vitrification d'une matière comprenant au moins une espèce chimique oxydable ou réductible, ledit procédé comprenant les étapes consistant à:
(a) mélange et chauffage à fusion d'une fritte de verre redox obtenue selon le procédé de l'invention et de la matière à confiner en des proportions appropriées pour le confinement de ladite matière par vitrification, et
(b) vitrification du mélange de façon à confiner ladite matière.

La fritte de verre redox susceptible d'être obtenue par le procédé de la présente invention, utilisée dans le procédé de confinement de l'invention est celle obtenue à l'étape a⁶ du procédé de l'invention.

Selon une variante de la présente invention, on peut mélanger les déchets à confiner directement avec la fonte verrière obtenue à l'étape (a⁵) du procédé de l'invention, puis vitrifier le mélange suivant l'étape (b) du procédé de confinement de l'invention. Dans cette variante, on n'applique pas l'étape (a⁶) de préparation de la fritte de verre.

La présente invention a pour caractéristique principale le réglage de l'état redox de la fritte de verre de confinement en y introduisant une ou plusieurs espèces redox, appelées aussi espèces multivalentes. Lorsque le confinement du déchet est achevé, cette ou ces espèce(s) multivalente(s) entre(nt) dans la composition finale du verre, s'il(s) n'est (ne sont) pas éliminé(s) lors du confinement (espèce(s) volatiles). Le pouvoir redox de la fritte redox de la présente invention est fixé par la quantité et l'état redox des espèces multivalentes incorporée(s).

Les inventeurs ont en effet remarqué qu'une optimisation de l'état redox de la fritte de verre utilisée pour le confinement des déchets conformément à la présente invention conduit, en fonction du déchet à vitrifier et de l'état redox de la fritte de la présente invention à améliorer la qualité du verre de confinement formulé, à faciliter son élaboration, et même, dans certains cas, à augmenter le taux d'incorporation de déchets dans le verre, par rapport aux verres de confinement de l'art antérieur.

Plusieurs avantages liés à l'utilisation du procédé de l'invention peuvent être cités :
- il ne génère aucun flux de matière supplémentaire par rapport à un procédé qui n'optimise pas le redox du verre que ce soit en entrée de procédé puisque les réducteurs sont dissous dans la fritte ou que ce soit en sortie puisque ce procédé de réglage du redox ne génère pas de gaz supplémentaires,
- c'est un procédé de réglage de redox robuste, car les réactions redox se déroulent essentiellement entre les espèces multivalentes incorporées à la fritte de verre et les espèces multivalentes après leur incorporation dans le verre fondu. Il est attendu, de ce fait, que les fluctuations du pouvoir redox du milieu environnant (taux de nitrates du déchet, bullage, taux de carbone, etc.) n'aient que peu d'incidence sur l'état redox final du verre ;
- toutes les difficultés liées au réglage du redox sont gérées en amont du procédé industriel actif lors de l'élaboration de la fritte en inactif ;
- la quantité d'oxydants ou de réducteurs nécessaires à ajouter dans la fritte selon l'invention est beaucoup plus faible qu'avec les autres techniques de réglage de redox couramment utilisées,
- les oxydants utilisables sont en outre moins puissants que ceux de l'art antérieur et moins accessibles car dissous dans une fritte de verre, ce qui limite le risque de réaction exothermique entre oxydants et réducteurs ce qui est une bonne garantie de sécurité pour le procédé.

Les inventeurs ont remarqué qu'il est possible d'introduire dans les frittes de verres de confinement de l'art antérieur de nombreux éléments multivalents, par exemple tels que le cérium, le fer, le chrome, le plutonium, le molybdène, le soufre, le césium, etc. (voir ci-dessous). Ils ont remarqué en outre que le degré d'oxydation avec lequel ils sont incorporés dans le verre permet, de manière inattendue, de modifier les propriétés du verre final tel que :
- les taux d'incorporation de certains éléments dans le verre diffèrent notablement en fonction de leur degré d'oxydation ce qui a un impact direct sur le facteur de réduction de volume de verre obtenu après le confinement de la matière par vitrification (voir document [1]) ;
- les propriétés du verre fondu peuvent être modifiées par l'état redox de certaines espèces et permettant dans certains cas l'élimination du moussage comme décrit dans le document [2]); et
- les qualités de durabilité chimique des verres peuvent, dans certains cas, être fonction de l'état redox du verre (document [3]).

Dans la présente, par « espèce chimique oxydable ou réductible » on entend une ou plusieurs espèce(s) chimique(s) qui, suivant leur état d'oxydation, peuvent être oxydées ou réduites par des réactions d'oxydoréduction. L'objectif atteint par le procédé de confinement de l'invention est le confinement de cette, au moins une, espèce chimique dans le verre formé à l'étape (c) du procédé.

Selon l'invention, l'espèce chimique oxydable ou réductible peut être par exemple un polluant qui doit être confiné par vitrification. Il peut s'agir par exemple d'un radionucléide, d'un élément ou d'un cation métallique ou non, d'un métalloïde, de soufre, ou un mélange de ceux-ci. Il peut s'agir par exemple aussi d'un ou plusieurs des lanthanides et actinides. L'espèce chimique oxydable ou réductible peut également être un élément du déchet qui doit être volatilisé hors du verre dans l'objectif d'améliorer l'élaboration vitrifiat et/ou les propriétés de confinement du déchet par vitrification.

Selon l'invention, lorsque ladite espèce chimique est un élément ou un cation métallique elle peut être choisie par exemple parmi As, Cd, Ce, Cr, Cs, Fe, Hg, Li, Mg, Mn, Mo, Na, Ni, Pb, Sb, Tc, Ti, V, Zn, des actinides (Pu par exemple) ou du soufre, un sel de ceux-ci, ou un mélange de deux ou plusieurs de ces éléments, cations et/ou de leur sels.

Par « confinement d'une matière par vitrification », on entend un procédé par lequel ladite matière est confinée dans une matrice de verre, c'est-à-dire intimement mélangée et retenue dans cette matrice.

Par « matière » on entend tout type de matériau pouvant être confiné dans une matrice de verre par vitrification avec les caractéristiques précitées (stabilité dans le temps, etc.). Il peut s'agir par exemple d'un déchet issu de l'incinération de déchets ménagers ou d'un déchet nucléaire.

Selon l'invention, dans un cas extrême, la matière peut être constituée exclusivement d'une ou de plusieurs espèces chimiques oxydable ou réductible au sens de la présente invention. On peut donc utiliser indifféremment, dans la présente, « matière » et « espèce chimique oxydable ou réductible ».

La « quantité donnée de matière » définit une simple base de calcul afin de déterminer la quantité minimale de couple redox utile à la mise en oeuvre de la présente invention pour une quantité de fritte de verre brute suffisante pour le confinement de ladite quantité donnée de matière. Elle peut être choisie arbitrairement, et peut par exemple correspondre à une quantité facilement manipulable en laboratoire et suffisante pour pouvoir déterminer la teneur de ladite, au moins une, espèce chimique oxydable ou réductible. L'essentiel est que cette quantité soit connue, c'est-à-dire que son poids soit mesuré, afin de pouvoir mettre en oeuvre la présente invention. Ensuite, la quantité de fritte de verre de confinement à utiliser pour confiner ladite matière pourra être déterminée par simple extrapolation, par exemple au moyen d'un graphique ou d'un logiciel exprimant la quantité de fritte de verre nécessaire au confinement de la matière en fonction du poids de ladite matière.

Dans la présente description, « Fritte de verre brute » ou ses précurseurs s'oppose à « fritte de verre redox » en ce que la « fritte de verre brute » ou ses précurseurs ne comprend pas de couple redox ajouté conformément à la présente invention.

Par « fritte de verre brute », on entend dans la présente des matières premières utilisées pour la fabrication de la « fritte de verre redox » de la présente invention. Il peut s'agir de verre, mais aussi de précurseurs de verre tels que des carbonates, nitrates, oxydes, borures, nitrures, carbures, métaux, sulfates, sulfures, hydroxydes, etc. ou des mélanges de ceux-ci.

Lorsqu'on utilise du verre, il peut être sous différentes formes: il peut s'agir par exemple d'une poudre, de paillette, de billes, voire des morceaux de verre.

Selon l'invention, avantageusement, la fritte de verre brute ou ses précurseurs peut être par exemple sur une forme physico-chimique telles que celles couramment utilisées pour apporter le verre de confinement dans un des procédés connus de confinement de déchets par vitrification de l'art antérieur.

Sa composition dépend bien entendu de l'objectif recherché dans la mise en oeuvre du procédé de vitrification de l'invention, en particulier de la matière à confiner.

La fritte de verre brute utilisée peut être constituée par exemple d'un verre à base de silice et peut comprendre des composés minéraux, tels que SiO₂ (silice), B₂O₃ (anhydride borique), Al₂O₃ (alumine), Na₂O (oxyde de sodium), Fe₂O₃, CaO, Li₂O, ZnO, ZrO₂, etc.

Par exemple lorsque la fritte de verre est destinée au confinement d'une matière telle qu'un déchet comprenant des radionucléides et/ou métalloides et/ou métaux, la fritte de verre brute est de préférence une fritte de verre silicatée. Il peut s'agir par exemple d'une fritte de verre comprenant principalement environ 80% de SiO₂ (silice), B₂O₃ (anhydride borique), Al₂O₃ (alumine) et Na₂O (oxyde de sodium). Il peut s'agir par exemple d'une fritte de verre comprenant de 20 à 80% ou de 20 à 75% en poids de SiO₂; de 0 à 40% ou de 0 à 25% en poids de B₂O_{3;} de 0 à 20% de Fe₂O₃; de 0 à 25% en poids de Na₂O; de 0 à 25% ou de 0 à 20% en poids de Al₂O₃; de 0 à 20% ou de 0 à 15% en poids de CaO; de 0 à 20% ou de 0 à 10% en poids de Li₂O; de 0 à 20% en poids de ZnO; et de 0 à 20% ou de 0 à 15% en poids de ZrO₂.

D'autres frittes connues de l'homme du métier et adaptées pour le confinement de tels matériaux peuvent bien entendu être utilisées dans le cadre de la présente invention.

Par « fritte de verre redox» ou « fritte de verre à pouvoir redox » ou « fritte de verre susceptible d'être obtenue par le procédé de la présente invention», on entend une fritte de verre brute dans laquelle a (ont) été incorporé(s) un ou plusieurs couple(s) redox, par exemple: conformément au procédé de fabrication de la fritte de l'invention. Suivant le ou les couples redox choisis, comme exposé ci-après, cette fritte de verre peut avoir un pouvoir réducteur ou oxydant en fonction de l'espèce chimique ou matière qui doit être confinée par vitrification suivant le procédé de l'invention.

Par « couple redox » on entend couple oxydant/réducteur d'un élément chimique. Il peut s'agir d'une ou plusieurs espèces multivalentes, c'est-à-dire présentant une ou plusieurs formes oxydée(s) et réduite(s). Il peut s'agir, de manière générale, d'un ou plusieurs des éléments chimiques, pouvant être sous une forme oxydée ou réduite, du tableau périodique des éléments.

Le couple redox peut être introduit dans la fritte de verre brute ou ses précurseurs par simple mélange.

Par exemple, lorsqu'il s'agit de confiner un déchet nucléaire suivant le procédé de la présente invention, le couple redox peut être par exemple celui d'un élément choisi dans le groupe comprenant Fe, Cr, V, S, Sb, Ti, As, Ce, Zn, ou un mélange de ces couples.

En effet, dans les procédés industriels les plus courants dans le domaine du confinement des déchets nucléaires, les déchets sont un mélange d'oxydes et de nitrates. L'état redox du verre final est donc commandé par le niveau redox du déchet : il est alors oxydé. Le procédé de l'invention permet de confiner ces déchets dans un verre dont l'état redox est optimisé avec les nombreux avantages décrits dans la présente.

Les espèces multivalentes qui peuvent être utilisées pour donner un pouvoir redox à la fritte de verre sont nombreuses. Parmi celles-ci, on peut citer à titre d'exemple non limitatif les espèces suivantes qui peuvent être utilisées seules ou en mélange: Fe(II)/Fe(III); Ce(IV)/Ce(III); Ti(IV)/Ti(III); V(V)/V(III); Cr(VI)/Cr(III)/Cr(II); S(+VI)/S(-II); Sb(V)/Sb(III), Zn(II)/Zn(0); As(V)/As(III); etc. Le document [4] regroupe ces exemples non limitatifs de couples redox et d'autres encore utilisables dans la présente invention, ainsi que leur potentiel redox caractéristique. Les oxydants ou réducteurs utilisables pour le réglage de l'équilibre du redox de la fritte redox selon l'invention peuvent également être amenés par les éléments constitutifs du verre (précurseurs) en choisissant de façon adéquate leur forme chimique, comme par exemple des nitrates, sulfates, oxydes pour les oxydants, et carbures, nitrures, borures, siliçures pour les réducteurs ; soit sous forme d'oxydants ou réducteurs n'entrant pas dans la composition du verre final car disparaissant totalement à la température de fusion de la fritte, au cours de l'élaboration de la fritte « à pouvoir redox » ou du confinement. Ces derniers sont par exemple des matières organiques, coke, graphite, acide nitrique, etc...

Certains des éléments chimiques du tableau périodique des éléments chimiques possèdent plusieurs couples redox et potentiels redox correspondant (plusieurs degrés d'oxydation), utilisables dans la présente invention. Tous n'ont pas été cités précédemment, mais uniquement pour des raisons pratiques. L'homme du métier saura aisément trouver le ou les couples les plus appropriés, parmi les éléments du tableau périodique et les tables de potentiel redox accessibles à tous, pour mettre en oeuvre la présente invention.

La nature des éléments multivalents, ou couple(s) redox, incorporés dans la fritte de verre brute, leur teneur et leur état redox dans la fritte sont à déterminer en fonction de la composition de la matière à confiner, par exemple du déchet. C'est à l'occasion de leur incorporation dans le verre que les espèces multivalentes équilibrent leur état redox avec le potentiel en oxygène ou activité en oxygène imposée par l'état redox des éléments multivalents incorporés à la fritte de verre.

L'homme du métier, sachant que tout couple redox oxyde un couple redox de potentiel inférieur, pourra choisir aisément le ou les couples redox à utiliser en fonction de la ou des espèces chimiques oxydables ou réductibles de la matière pour mettre en oeuvre la présente invention, l'objectif étant de maintenir dans le verre vitrifié l'une ou l'autre de la forme oxydée ou réduite de la, ou des, espèce(s) chimique(s) oxydable(s) ou réductible(s). Lorsque plusieurs couples sont disponibles, le choix peut en outre être fait en fonction du coût du couple redox ou de son influence sur d'autres propriétés du verre (viscosité, durabilité chimique, microstructure, etc.).

La quantité de « couple redox » à incorporer dans la fritte de verre est déterminée en première approche par stoechiométrie à partir des équations d'oxydoréductions de la ou des espèces chimiques de la matière à confiner avec le ou les couples redox choisis. L'homme du métier n'aura donc aucune difficulté à déterminer cette quantité.

Par « équilibre redox déterminé », on entend l'équilibre, c'est-à-dire le ratio, visé entre l'état oxydé et l'état réduit de ladite espèce chimique. Cet équilibre permet notamment d'augmenter la solubilité cette espèce chimique dans le verre de confinement, et donc d'améliorer son confinement. Cet équilibre est atteint grâce à la quantité de couple redox, éventuellement ajustée, ajoutée à la fritte de verre pour obtenir la fritte de verre redox selon l'invention. Par exemple, pour le cérium, selon l'invention, au-delà d'un rapport CeIII/CeIV de 6,67, une teneur en cérium totale de 7% massique peut être obtenue avec une température de fusion de 1200°C.

Il peut être utile d'ajuster la quantité de « couple redox » pour tenir compte des influences liées aux éléments n'entrant pas dans la composition du verre mais qui pourraient avoir une influence sur le pouvoir redox du verre, par exemple l'environnement gazeux lors de la préparation de la fritte et/ou du confinement, la présence de matières carbonées et/ou de nitrates, etc. Il s'agit de l'étape « a⁴ » du procédé de l'invention. Cette étape est à la portée de l'homme du métier qui ajoutera ou diminuera la quantité de couple redox de manière appropriée pour la mise en oeuvre du procédé de l'invention.

Selon l'invention, on peut incorporer en outre, dans la fritte de verre ou ses précurseurs, au moins un composé permettant de régler le rapport redox du couple redox dans la fritte de verre fabriquée en fonction de ladite, au moins une espèce chimique. Par « rapport redox » on entend la proportion de la forme oxydée par rapport à la forme réduite de l'élément constituant le couple redox.

Ce rapport redox peut être déterminé stoechiométriquement à partir des équations chimiques d'oxydoréduction des espèces en présence. Il s'agit d'un composé dont la présence a un effet sur l'équilibre *forme oxydée ↔ forme réduite* du couple redox en favorisant l'une ou l'autre de ces formes. Par exemple lorsque le couple redox est Fe²⁺/Fe³⁺, le composé permettant de régler le rapport redox de ce couple peut être par exemple du graphite qui favorise la forme Fe²⁺ du couple précité. De manière plus générale, ce composé peut être choisi parmi le graphite, les matières organiques, coke, carbures, borures, siliçures, sulfures, métaux, etc.

Selon l'invention, l'incorporation du couple redox dans la fritte de verre brute, et éventuellement du composé chimique permettant de régler le rapport redox du ou des couples redox, peut être réalisée par leur simple mélange et chauffage « à fusion » avec de la fritte de verre brute ou fritte brute ou ses précurseurs comme décrit ci-dessus, par exemple sous forme oxydes, carbonates ou nitrates.

La température du bain de fusion doit être assez élevée pour entraîner la fusion totale de la fritte de verre dans le four, et, si nécessaire, de la matière, mais pas trop élevée pour optimiser le bilan thermique de fusion en évitant une perte d'énergie inutile. Par exemple, lorsque la fritte de verre brute est une fritte de verre borosilicatée, le chauffage peut être réalisé à une température de 1100 à 1400°C, par exemple à 1200°C, de façon à faire fondre le verre.

Le chauffage peut être réalisé dans tout type de four permettant de faire fondre la fritte de verre brute utilisée. Avantageusement, il s'agit d'un four de vitrification. Le chauffage peut être réalisé par exemple dans un pot métallique, par exemple au moyen d'un générateur de 200 kW de puissance fonctionnant à une fréquence de 4 kHz. Le verre à l'intérieur du pot métallique est alors fondu par conduction au contact de la paroi métallique.

D'autres moyens de chauffage appropriés connus de l'homme du métier dans le domaine technique de la présente invention peuvent bien entendu être utilisés, par exemple un chauffage par torche à plasma direct ou indirect, par arc électrique, un chauffage au gaz, un four à moufle, par induction directe dans le verre, etc. L'essentiel est qu'un bain de fusion soit formé à partir de la fritte de verre brute ou de ses précurseurs pour pouvoir y incorporer le ou les couple(s) redox.

L'élaboration de la fritte redox consiste à mélanger à une température suffisamment élevée pour aboutir à une fonte verrière les éléments précurseurs de la fritte brute et le(s) couple(s) redox avec les oxydants et les réducteurs adéquat pour aboutir au final à la bonne composition et au bon équilibre redox du couple redox.

Selon l'invention, en variante, la fritte de verre redox, obtenue peut être utilisée immédiatement sous sa forme de bain de fusion obtenu à l'étape (a⁵) pour confiner une matière selon le procédé de l'invention.

De préférence, la fonte de verrière obtenue est refroidie et travaillée de façon à obtenir une fritte de verre brute au sens de la présente invention, c'est-à-dire utilisable pour confinement par vitrification de ladite matière. Par exemple, elle peut être mise sous forme particulaire par broyage pour un entreposage jusqu'à la mise en oeuvre du procédé de confinement de la présente invention. Les techniques permettent de former des poudres ou des billes de verre, ou d'autres formes telles que celles citées dans la présente sont connues de l'homme du métier.

Lorsqu'elle est mise sous forme particulaire, elle est refroidie, puis introduite dans le four de vitrification en même temps que le déchet. Les inventeurs ont remarqué que lorsque le verre adjuvant de vitrification, ou fritte de verre à « pouvoir redox» susceptible d'être obtenue par le procédé de la présente invention, est introduit sous forme particulaire dans le procédé de vitrification de la présente invention, de manière inattendue, son efficacité à régler le redox peut être modifiée en fonction des dimensions de ces particules. Une surface trop importante entre la fritte de verre « à pouvoir redox » et l'atmosphère oxydante ou réductrice pourrait perturber l'état redox de la fritte avant l'incorporation de tout ou partie des éléments à confiner. Selon l'invention, on préférera des particules de dimension allant de 1µm à 2 cm, de préférence de 100 µm à 1 cm.

Selon l'invention, il peut être avantageux d'introduire la fritte susceptible d'être obtenue par le procédé de la présente invention sous une forme particulière, par exemple sous forme de billes de verre. En effet, cela permet à la fritte redox susceptible d'être obtenue par le procédé de la présente invention de s'incorporer rapidement dans le bain de fusion du verre lors du de la mise en oeuvre du procédé de confinement de l'invention et évite au maximum les perturbations de l'atmosphère au-dessus du bain de verre.

Le procédé de l'invention est donc un procédé d'élaboration de verre dans lequel tout ou une partie des adjuvants de vitrification sont introduits sous forme d'un verre qui contient une ou des espèces chimiques multivalentes permettant d'imposer l'état redox du verre final. Ce niveau redox est réglé en amont du procédé industriel de vitrification pour le confinement d'une matière.

Dans le procédé de confinement de la présente invention, le mélange fritte de verre à pouvoir redox et matière est de préférence effectué afin d'obtenir un mélange homogène et éviter la formation de « poches » de matière, par exemple de poches de calcinats dans le cas de déchets nucléaires. Il peut être effectué dans la fritte de verre redox avant fusion ou dans la fritte de verre redox en fusion. L'homogénéisation peut être effectuée par exemple au moyen d'un bullage, d'un agitateur mécanique, d'une convection liée aux gradients thermiques, etc.

Selon l'invention, la fritte de verre redox peut être introduite séquentiellement à l'introduction de tout ou partie de ladite matière à vitrifier tel que pratiqué dans les procédés de vitrification industriels actuels.

Selon l'invention, la matière à vitrifier et la fritte de verre redox peuvent être introduites en deux points différents d'un four de vitrification en vue leur mélange pour le confinement de ladite matière. Le mélange se fait ainsi dans le four, sans autre étape préalable.

Selon l'invention, les proportions matière à confiner/fritte de verre redox sont choisies de manière à permettre le confinement de ladite matière dans le verre formé par la fritte de verre redox. Ces proportions sont dites « appropriées » dans la présente. L'homme du métier n'aura aucun mal à déterminer lesdites proportions. Par exemple dans le cas de déchets nucléaires, ces proportions sont déterminées pour obtenir un confinement répondant aux exigences du stockage subséquent de ces déchets. Dans cet exemple, les proportions sont de 5 à 50 % en poids de déchet nucléaire pour 50 à 95 % en poids de fritte de verre redox.

La présente invention permet avantageusement dans certains cas d'incorporer d'avantage de matière qu'avec les frittes de verre de l'art antérieur. Ces cas sont ceux où une des différentes formes oxydée(s) et réduite(s) d'une espèce chimique de la matière montre une solubilité dans le verre différente que celle des autres formes. Par exemple le cérium est plus soluble dans les verres silicatés à l'état Ce^{+III} qu'à l'état Ce^{+IV}. Pour pouvoir incorporer plus de déchet riche en cérium, les inventeurs de la présente ont donc utilisé une fritte de verre à pouvoir réducteur susceptible d'être obtenue par le procédé de la présente invention. Dans l'exemple du cérium, la fritte de verre susceptible d'être obtenue par le procédé de l'invention est une fritte réductrice permettant de favoriser la forme Ce^{+III} du cérium. Cette fritte permet de confiner plus de 7 % en masse de cérium, alors qu'à la même température, il était difficile d'atteindre 2 % avec les frittes de l'art antérieur.

Selon l'invention, le chauffage du mélange fritte de verre redox et matière peut être réalisé dans tout type de four permettant de faire fondre la fritte de verre utilisée en mélange avec la matière à confiner. Avantageusement, il s'agit d'un four de vitrification, de préférence adapté à la matière à confiner, en particulier lorsqu'il s'agit d'un déchet, par exemple nucléaire et/ou comprenant des métaux lourds et/ou des éléments volatiles toxiques.

Le chauffage est également réalisé à fusion, c'est à dire qu'il doit permettre de former un bain de fusion comme indiqué ci-dessus pour la fabrication de la fritte de verre. La température du bain de fusion doit être assez élevée pour entraîner la fusion totale de la fritte de verre redox dans le four et réaliser l'incorporation des éléments à confiner en mélange avec la matière. Cette température est donc fonction de la fritte de verre et de la matière à confiner.

Selon l'invention, lorsque la fritte de verre redox est une fritte de verre borosilicatée, le chauffage du mélange fritte de verre et matière peut être réalisé par exemple à une température de 1000 à 1600°C, par exemple à 1200°C.

Selon l'invention, le chauffage du mélange est de préférence effectué dans un four de vitrification, par exemple dans un pot métallique, chauffé par exemple à une température de 1000 à 1600°C, par exemple à 1 200 °C, de façon à faire fondre le verre. Le chauffage peut être réalisé par exemple au moyen d'un générateur de 200 kW de puissance fonctionnant à une fréquence de 4 kHz. Le verre à l'intérieur du pot métallique est alors fondu par conduction au contact de la paroi métallique.

D'autres moyens de chauffage connus de l'homme du métier dans le domaine technique de la présente invention peuvent bien entendu être utilisés, par exemple ceux indiqués ci-dessus.

La présente invention présente de nombreux avantages. Par exemple, le procédé de l'invention ne génère aucun flux de matière supplémentaire par rapport aux procédés de l'art antérieur qui n'optimisent pas le pouvoir redox du verre que ce soit en entrée de procédé puisque les réducteurs sont dissous dans la fritte ou en sortie puisque le procédé de la présente invention ne génère pas de gaz supplémentaires.

De plus, le procédé de l'invention est compatible avec les procédés et installations industriels de vitrification actuels, car il ne nécessite que l'utilisation d'une fritte redox susceptible d'être obtenue par le procédé conforme à la présente invention.

Le procédé de l'invention est un procédé de réglage de pouvoir redox robuste, car les réactions redox se déroulent essentiellement entre les espèces multivalentes incorporées pour la fabrication de la fritte de verre à pouvoir redox et les espèces multivalentes de la matière ou formant la matière à confiner après son incorporation dans le verre fondu. De ce fait, les fluctuations du pouvoir redox du milieu environnant, c'est-à-dire par exemple le taux de nitrates du déchet, le bullage, le taux de carbone, etc., n'ont qu'une incidence limitée sur l'état redox final du verre.

En outre, toutes les difficultés qui étaient liées au réglage du pouvoir redox sont, avec le procédé de l'invention, gérées en amont du procédé industriel actif, c'est à dire lors de l'élaboration de la fritte de la présente invention, en inactif.

D'autres caractéristiques et avantages pourront apparaître à l'homme du métier à la lecture des exemples non limitatifs suivants.

### Exemples

Dans ces exemples, une fritte à « pouvoir redox » est élaborée et testée à l'échelle de plusieurs centaines de grammes.

### Exemple 1: fabrication de la fritte

La fritte testée a la composition chimique suivante exprimée en % massique : SiO₂: 53,5% + B₂O₃: 16,5% + Fe₂O₃: 9,1% + Na₂O: 6,4% + Al₂O₃: 3,9% +CaO: 4,8% + Li₂O: 2,3% + ZnO: 2 ,9% + ZrO₂: 0,6%.

Il s'agit d'une fritte de verre borosilicaté classique, appelée ci-après « type R7/T7 », qui sert d'adjuvant de vitrification pour la vitrification actuelle des solutions de produit de fission à La Hague (France), à laquelle est ajouté, suivant la présente invention, du fer de manière à donner à la fritte un « pouvoir redox ». Dans cet exemple, c'est une fritte au pouvoir réducteur qui est souhaitée.

En imposant un rapport Fe^{II}/Fe^{III} déterminé, l'état redox de la fritte est fixé. Le rapport Fe^{II}/Fe^{III} est choisi pour être de 9/1. Ce rapport est obtenu grâce à du graphite qui sert de réducteur au fer. La quantité de graphite à ajouter dépend donc en particulier de l'état redox que l'on souhaite donner à la fritte.

L'élaboration de cette fritte et le réglage du rapport redox Fe^{II}/Fe^{III} dans la fritte sont réalisés en même temps en mélangeant intimement à 1200°C dans un four à moufle sous air, 700 g de la fritte «type R7/T7» et 70 g de fer sous forme Fe₂O₃, et 20 g de graphite en poudre.

Dans cet exemple, la quantité de fritte de verre élaboré à chaque fois est de l'ordre de 770 g.

Dans la fritte de verre obtenue, 90 % en poids du fer total est sous forme Fe^{II}. La pression en oxygène dans le verre à 1200°C est de 10⁻⁵ Pa.

### Exemple 2: confinement d'un déchet

La mise en oeuvre de la fritte réductrice obtenue suivant l'exemple 1 a été testée pour différentes applications pour lesquelles il est opportun d'avoir au final un verre réduit.

La première application concerne la solubilisation du cérium, espèce souvent présente dans les solutions à vitrifier et principal simulant du plutonium en inactif.

Les inventeurs ont remarqué que le cérium est plus soluble dans l'état Ce^{+III} que dans l'état Ce^{+IV}. Pour pouvoir incorporer plus de déchet riche en cérium, ils ont noté qu'il convenait de fabriquer un verre réduit.

C'est ainsi que la fritte réduite de l'exemple 1 a été mélangée intimement à du cérium pris sous forme CeO₂, c'est à dire dans l'état Ce^{+IV}: 100 g de mélanges à différentes teneurs en cérium de 0,4% à 10,5% massique en CeO₂ ont été portés à 1200°C dans un four à moufle sous air sans ajout d'additifs ou d'autres matériaux.

Des verres incorporant du cérium à des teneurs dépassant 7% massique ont ainsi été élaborés et sont homogènes.

Les mêmes expériences ont été faites en remplaçant la fritte réductrice d'une part avec une fritte de même composition chimique mais avec un état redox du fer plus oxydé, et d'autre part avec de la fritte borosilicaté « type R7/T7 » de l'art antérieur ne contenant pas de fer. Cette dernière expérience (fritte borosilicaté sans fer) ne permettaient pas d'incorporer la teneur précitée en cérium, et les teneurs limites étaient typiquement dans ces cas de 2% massique.

Ces résultats démontrent bien des avantages incontestables de la présente invention par rapport aux procédés de l'art antérieur.

### Exemple 3: réduction des phénomènes de moussage

Une autre application d'une fritte susceptible d'être obtenue par le procédé selon l'invention à « pouvoir redox » a été testée dans le but d'éviter les phénomènes de moussage qui peuvent apparaître dans les procédés de vitrification. Ces phénomènes sont dus à des excursions en température qui induisent la réduction de certains éléments, l'oxygène perdu lors de cette réduction part alors sous forme de bulles et est à l'origine du moussage du verre à sa surface.

La fritte réductrice de l'exemple 1 permet de réduire préventivement les espèces multivalentes à l'origine du moussage. La pression en oxygène dans le bain de verre est ainsi rendue trop basse pour qu'une élévation de température génère des réactions de réduction et un départ d'oxygène sous forme de bulle.

L'expérience qui le démontre a été réalisée sur environ 500 g de verre fondu élaboré en mélangeant à 1200°C, dans un creuset platine agité chauffé par effet joule sous air, 388 g de la même fritte réduite que présentée précédemment à 130 g de calcinat de produits de fission type R7/17 simulés calcinés.

Le verre fondu ainsi élaboré est porté jusqu'à 1350°C sans faire apparaître de phénomènes de moussage.

Pour comparer à l'art antérieur, un verre fondu est élaboré suivant les mêmes principes en remplaçant la fritte réduite susceptible d'être obtenue par le procédé de la présente invention par la fritte « type R7/T7» de l'art antérieur. L'excursion en température fait nettement apparaître un phénomène de moussage entre 1200°C et 1300°C.

Ces expériences réalisées à l'échelle du laboratoire sont reconnues pour être représentatives des phénomènes se produisant sur les procédés à l'échelle industrielle.

Ces expériences montrent là encore que, grâce à une fritte au « pouvoir redox » susceptible d'être obtenue par le procédé conforme à la présente invention, un réglage efficace du redox du verre final peut être obtenu sans avoir à réaliser des ajouts supplémentaires, tels que des additifs réducteurs, par exemple des graphites, des composés organiques, des nitrates, des carbures, des espèces métalliques, etc. dans le procédé de vitrification.

### Références bibliographiques

**[1]** C. Lopez - Solubilité des actinides et de leurs simulants dans les verres nucléaires limites d'incorporation et compréhension des mécanismes-Rapport CEA-R-6019
**[2]** H.D. Schreiber, S.J. Kozak, P.G. Leonard, K.K. Mc Manus - Redox systematics in model glass compositions from west valley - Mat. Res. Symp. Proc. Vol. 294. - 1993.
**[3]** O. Pinet, E. Baudrey, J.L. Dussossoy, C. Fillet, J.F. Hollebecque - Redox effect on waste containment glass properties: case of a borosilicate glass containing 16%wt Mo03 - Proc. XIX Int. Congr. Glas Edimburgh, 1-6 july 2001, Glass Technol., 2002.
**[4]** O. Pinet, C. Di Nardo, Characteristic oxygen fugacity of redox couples in glass applied to the analysis of the redox state of glass metls - Processing and characterization of Electrochemical Materials and Device - Ceramic transaction - Vol. 109, American Ceramic Society, Indianapolis, April 2000.

## Revendications

1. Procédé de fabrication d'une fritte de verre redox destinée au confinement par vitrification d'une matière comprenant au moins une espèce chimique oxydable ou réductible, ledit procédé comprenant les étapes consistant à:
(a¹) choisir au moins un couple redox permettant de maintenir ladite, au moins une, espèce chimique dans un équilibre redox déterminé,
(a²) déterminer la quantité de ladite espèce chimique présente pour une quantité donnée de ladite matière,
(a³) déterminer par stoechiométrie, pour ladite quantité donnée de ladite matière, la quantité minimale dudit, au moins un, couple redox nécessaire pour maintenir ladite, au moins une, espèce chimique audit équilibre redox déterminé,
(a⁴) éventuellement ajuster ladite quantité minimale dudit, au moins un, couple redox de manière à tenir compte d'autres éléments oxydants ou réducteurs de la matière et/ou de la fritte de verre brute et/ou de l'environnement dans lequel le confinement par vitrification de la matière sera réalisée,
(a⁵) incorporer par mélange dans une quantité de fritte de verre brute, ou de ses précurseurs, appropriée pour le confinement de ladite quantité donnée de matière, au moins ladite quantité minimale, éventuellement ajustée, dudit, au moins un, couple redox et porter le mélange à une température suffisante pour obtenir une fonte verrière, et
(a⁶) refroidir la fonte verrière obvenue et la travailler de façon à obtenir une fritte de verre redox destinée au confinement par vitrification de ladite matière.

2. Procédé de confinement par vitrification d'une matière comprenant au moins une espèce chimique oxydable ou réductible, ledit procédé comprenant les étapes consistant à:
(a) mélange et chauffage à fusion d'une fritte de verre redox obtenue selon le procédé de la revendication 1, et de la matière à confiner en des proportions appropriées pour le confinement de ladite matière par vitrification, et
(b) vitrification du mélange de façon à confiner ladite matière.

3. Procédé selon la revendication 1 ou 2, dans lequel ladite, au moins une, espèce chimique est un radionucléide, un élément ou un cation métallique ou non, un métalloïde, le soufre, ou un mélange de ceux-ci.

4. Procédé selon la revendication 1 ou 2, dans lequel ladite, au moins une, espèce chimique étant un élément ou cation métallique, elle est choisie parmi As, Cd, Ce, Cr, Cs, Fe, Hg, Li, Mg, Mn, Mo, Na, Ni, Pb, Sb, Tc, Ti, V, Zn, des actinides tels que Pu, du soufre, ou un sel de ceux-ci, ou un mélangé de deux ou plusieurs de ces éléments, cations et/ou de leur sels.

5. Procédé selon la revendication 1 ou 2, dans lequel ladite, au moins une, espèce chimique est un lanthanide ou un actinide.

6. Procédé selon la revendication 1 ou 2, dans lequel le couple redox est un couple redox d'un élément choisi dans le groupe comprenant Fe, Cr, V, S, Sb, Ti, As, Ce et Zn.

7. Procédé selon la revendication 1 ou 2, dans lequel on incorpore en outre, dans la fritte de verre ou ses précurseurs, au moins un composé permettant de régler le rapport redox du couple redox dans la fritte de verre fabriquée en fonction de ladite, au moins une espèce chimique.

8. Procédé selon la revendication 7, dans lequel le couple redox est Fe²⁺/Fe³⁺, et le composé permettant de régler le rapport redox de ce couple est du graphite.

9. Procédé selon la revendication 1 ou 2, dans lequel la fritte de verre brute est une fritte de verre borosilicatée.

10. Procédé selon la revendication 1 ou 2, dans lequel la fritte de verre brute comprend de 20 à 80 % en poids de SiO₂; de 0 à 25 % en poids de B₂O₃; de 0 à 20 % de Fe₂O₃; de 0 à 25 % en poids de Na₂O; de 0 à 20 % en poids de Al₂O₃; de 0 à 15 % en poids de CaO; de 0 à 10 % en poids de Li₂O; de 0 à 20 % en poids de ZnO ; et de 0 à 15 % en poids de ZrO₂.

11. Procédé selon la revendication 1, dans lequel la température suffisante à l'étape a⁵ est une température de 1000 à 1600°C.

12. Procédé selon la revendication 1 ou 2, dans lequel, la fritte de verre de confinement fabriquée est sous forme particulaire, par exemple sous forme de billes de verre.

13. Procédé selon la revendication 2, dans lequel la fritte de verre est une fritte de verre borosilicatée et le chauffage de l'étape (b) est réalisé à une température de 1100 à 1400°C.

14. Procédé selon la revendication 2, dans lequel la fritte de verre est introduite séquentiellement à l'introduction de tout ou partie de ladite matière à vitrifier.

15. Procédé selon la revendication 2, dans lequel le chauffage est réalisé dans un four de vitrification.

16. Procédé selon la revendication 2, dans lequel la matière à vitrifier et la fritte de verre sont introduites en deux points différents d'un four de vitrification en vue leur mélange pour le confinement de ladite matière.

17. Procédé selon la revendication 1 ou 2, dans lequel ladite matière est un déchet nucléaire.

18. Procédé selon la revendication 1 ou 2, dans lequel ladite matière est un déchet issu de l'incinération de déchets ménagers.

## Claims

1. A process for the manufacture of a redox glass frit for the containment by vitrification of a material comprising at least one oxidizable or reducible chemical species, said process comprising the steps consisting in:
(a¹) selecting at least one redox couple which makes it possible to maintain said at least one chemical species in a given redox equilibrium,
(a²) determining the amount of said chemical species present for a given amount of said material,
(a³) determining by stoichiometry, for said given amount of said material, the minimum amount of said at least one redox couple necessary to maintain said at least one chemical species at said given redox equilibrium,
(a⁴) optionally, adjusting said minimum amount of said at least one redox couple so as to take into account other oxidizing or reducing elements of the material and/or of the raw glass frit and/or of the environment in which the containment by vitrification of the material will be carried out,
(a⁵) incorporating, by mixing, at least said minimum, optionally adjusted, amount of said at least one redox couple into an amount of raw glass frit, or of its precursors, suitable for the containment of said given amount of material, and bringing the mixture to a temperature sufficient to obtain a glass melt, and
(a⁶) cooling the glass melt obtained and working it so as to obtain a redox glass frit for the containment of said material by vitrification.

2. A process for the containment by vitrification of a material comprising at least one oxidizable or reducible chemical species, said process comprising the steps consisting in:
(a) mixing and hot-melting a redox glass frit obtained according to the process of claim 1 and the material to be contained in proportions suitable for the containment of said material by vitrification, and
(b) vitrifying the mixture so as to contain said material.

3. Process according to claim 1 or 2, in which said at least one chemical species is a radionucleide, a metal or nonmetal element or cation, a metalloid, sulfur, or a mixture thereof .

4. Process according to claim 1, or 2, in which said at least one chemical species, since it is a metal element or cation, is chosen from As, Cd, Ce, Cr, Cs, Fe, Hg, Li, Mg, Mn, Mo, Na, Ni, Pb, Sb, Tc, Ti, V, Zn, actinides such as Pu, sulfur, or a salt thereof, or a mixture of two or more of these elements, cations and/or of their salts.

5. Process according to claim 1 or 2, in which said at least one chemical species is a lanthanide or an actinide.

6. Process according to claim 1 or 2, in which the redox couple is a redox couple of an element chosen from the group comprising Fe, Cr, V, S, Sb, Ti, As, Ce and Zn.

7. Process according to claim 1 or 2, in which also incorporated into the glass frit or its precursors is at least one compound for regulating the redox ratio of the redox couple in the glass frit manufactured according to said at least one chemical species.

8. Process according to claim 7, in which the redox couple is Fe²⁺/Fe³⁺, and the compound for regulating the redox ratio of this couple is graphite.

9. Process according to claim 1 or 2, in which the raw glass frit is a borosilicate glass frit.

10. Process according to claim 1 or 2, in which the raw glass frit comprises from 20% to 80% by weight of SiO₂; from 0 to 25% by weight of B₂O₃; from 0 to 20% of Fe₂O₃; from 0 to 25% by weight of Na₂O; from 0 to 20% by weight of Al₂O₃; from 0 to 15% by weight of CaO; from 0 to 10% by weight of Li₂O; from 0 to 20% by weight of ZnO; and from 0 to 15% by weight of ZrO₂.

11. Process according to claim 1, in which the temperature sufficient in step a⁵ is a temperature of 1000 to 1600°C.

12. Process according to claim 1 or 2, in which the containment glass frit manufactured is in particulate form, for example in the form of glass beads.

13. Process according to claim 2, in which the glass frit is a borosilicate glass frit and the heating in step (b) is carried out at a temperature of 1100 to 1400°C.

14. Process according to claim 2, in which the glass frit is introduced sequentially to the introduction of all or part of said material to be vitrified.

15. Process according to claim 2, in which the heating is carried out in a vitrification furnace.

16. Process according to claim 2, in which the material to be vitrified and the glass frit are introduced at two different points of a vitrification furnace with a view to mixing them for the containment of said material.

17. Process according to claim 1 or 2, in which said material is a nuclear waste.

18. Process according to claim 1 or 2, in which said material is a waste derived from the incineration of household refuse.

## Patentansprüche

1. Verfahren zur Herstellung einer Redox-Glasfritte, bestimmt zum Einschluss einer wenigstens eine oxidierbare oder reduzierbare chemische Spezies umfassenden Substanz durch Verglasung, wobei das genannte Verfahren die folgenden Schritte umfasst:
(a¹) Auswählen wenigstens eines Redox-Paars, das ermöglicht, die genannte wenigstens eine chemische Spezies in einem bestimmten Redox-Gleichgewicht zu halten,
(a²) Bestimmen der Menge der für eine bestimmte Menge der genannten Substanz vorhandenen chemischen Spezies,
(a³) Bestimmen - für die genannte bestimmte Menge der genannten Substanz - der minimalen Menge des genannten wenigstens einen notwendigen Paars mittels Stöchiometrie, um die genannte wenigstens eine chemische Spezies in dem genannten bestimmten Redox-Gleichgewicht zu halten,
(a⁴) Eventuelles Anpassen der genannten minimalen Menge des genannten wenigstens einen Redox-Paars, um anderen Oxidations- oder Reduktionselementen der Substanz und/oder der rohen Glasfritte und/oder der Umgebung, in welcher der Verglasungs-Einschluss der Substanz stattfinden wird, Rechnung zu tragen,
(a⁵) Beimischen - durch Vermischung mit einer zum Einschluss der genannten bestimmten Substanzmenge geeigneten Menge einer rohen Glasfritte, oder ihren Vorläufern - von wenigstens der genannten eventuell angepassten minimalen Menge des genannten wenigstens einen Redox-Paars, und Erwärmen der Mischung auf eine für die Glasschmelze ausreichende Temperatur, und
(a⁶) Abkühlen und bearbeiten der erhaltenen Glasschmelze, so dass man eine für den Verglasungs-Einschluss der genannten Substanz geeignete Redox-glasfritte erhält.

2. Verfahren zum Einschluss einer wenigstens eine oxidierbare oder reduzierbare chemische Spezies umfassenden Substanz durch Verglasung, wobei das Verfahren die folgenden Schritte umfasst:
(a) Mischung und Schmelzerwärmung einer gemäß dem Verfahren nach Anspruch 1 hergestellten Redox-Glasfritte und der einzuschließenden Substanz in den für den Verglasungs-Einschluss der genannten Substanz geeigneten Proportionen, und
(b) Verglasung der Mischung, um die genannte Substanz einzuschließen.

3. Verfahren nach Anspruch 1 oder 2, bei dem die genannte wenigstens eine chemische Spezies ein Radionuklid, ein Element oder ein Kation, metallisch oder nicht, ein Halbmetall, Schwefel oder eine Mischung aus diesen ist.

4. Verfahren nach Anspruch 1 oder 2, bei dem die genannte wenigstens eine chemische Spezies, wenn sie ein Element oder metallisches Kation ist, ausgewählt wird unter As, Cd, Ce, Cr, Cs, Fe, Hg, Li, Mg, Mn, Mo, Na, Ni, Pb, Sb, Tc, Ti, V, Zn, Actinoiden wie etwa Pu, Schwefel, oder einem Salz von diesen, oder einer Mischung von zwei oder mehreren dieser Elemente, Kationen und/oder ihren Salzen.

5. Verfahren nach Anspruch 1 oder 2, bei dem die genannte wenigstens eine chemische Spezies ein Element aus der Gruppe der Lanthanoide oder der Actinoide ist.

6. Verfahren nach Anspruch 1 oder 2, bei dem das Redox-Paar ein Redox-Paar eines Elements aus der Fe, Cr, V, S, Sb, Ti, As, Ce und Zn umfassenden Gruppe ist.

7. Verfahren nach Anspruch 1 oder 2, bei dem man der Glasfritte oder ihren Vorläufern wenigstens eine Verbindung beimischt, die ermöglicht, das Redox-Verhältnis des Redox-Paars in der entsprechend der genannten wenigstens einen chemischen Spezies hergestellten Glasfritte zu regulieren.

8. Verfahren nach Anspruch 7, bei dem das Redox-Paar Fe²⁺/Fe³⁺ ist und die Verbindung zur Regulierung des Redox-Verhältnisses dieses Paars Graphit ist.

9. Verfahren nach Anspruch 1 oder 2, bei dem die rohe Glasfritte eine Borsilikatglas-Fritte ist.

10. Verfahren nach Anspruch 1 oder 2, bei dem die rohe Glasfritte umfasst: 20 bis 80 Gew.% SiO₂, 0 bis 25 Gew.% B₂O₃, 0 bis 20 Gew.% Fe₂O₃; 0 bis 25 Gew.% Na₂O; 0 bis 20 Gew.% Al₂O₃; 0 bis 15 Gew.% CaO; 0 bis 10 Gew.% Li₂O; 0 bis 20 Gew.% ZnO; und 0 bis 15 Gew.% ZrO_{2.}

11. Verfahren nach Anspruch 1, bei dem die ausreichende Temperatur des Schritts a⁵ eine Temperatur von 1000 bis 1600°C ist.

12. Verfahren nach Anspruch 1 oder 2, bei dem die hergestellte Einschluss-Glasfritte eine besondere Form aufweist, zum Beispiel in Form von Glaskugeln.

13. Verfahren nach Anspruch 2, bei dem Glasfritte eine Borsilikatglas-Fritte ist und die Erwärmung des Schritts (b) einer Temperatur von 1100 bis 1400°C entspricht.

14. Verfahren nach Anspruch 2, bei dem die Glasfritte eingegeben wird, nachdem die genannte zu verglasende Substanz ganz oder teilweise eingegeben worden ist.

15. Verfahren nach Anspruch 2, bei dem die Erwärmung in einem Verglasungsofen realisiert wird.

16. Verfahren nach Anspruch 2, bei dem die zu verglasende Substanz und die Glasfritte hinsichtlich ihrer Vermischung zum Einschluss der genannten Substanz an zwei verschiedenen Punkten eines Verglasungsofens eingegeben werden.

17. Verfahren nach dem Anspruch 1 oder 2, bei dem die genannte Substanz ein Nuklearabfall ist.

18. Verfahren nach Anspruch 1 oder 2, bei dem die genannte Substanz ein aus der Verbrennung von Haushaltsabfällen stammender Abfall ist.
